**Europäisches Patentamt**

**European Patent Office**

**Office européen des brevets**

(19)

(11) **EP 1 387 599 A1**

(12) **EUROPEAN PATENT APPLICATION**

(43) Date of publication:
**04.02.2004 Bulletin 2004/06**

(51) Int Cl.⁷: **H04Q 7/38**, H04B 1/707

(21) Application number: **03254743.2**

(22) Date of filing: **29.07.2003**

| | |
|---|---|
| (84) Designated Contracting States:<br>**AT BE BG CH CY CZ DE DK EE ES FI FR GB GR HU IE IT LI LU MC NL PT RO SE SI SK TR**<br>Designated Extension States:<br>**AL LT LV MK**<br><br>(30) Priority: **02.08.2002 GB 0218046**<br><br>(71) Applicant: **Hutchison Whampoa Three G IP (Bahamas) Limited**<br>**Nassau, New Providence (BS)** | (72) Inventor: **Truelove, Stephen**<br>**Sutton Coldfield West Midlands, B73 5EL (GB)**<br><br>(74) Representative: **Butcher, Ian James et al**<br>**A.A. Thornton & Co.**<br>**235 High Holborn**<br>**London WC1V 7LE (GB)** |

(54) **Improved channelisation code management for softer handover in CDMA mobile communications systems**

(57)　In 3G or other CDMA mobile communications systems, it is proposed that, for a user in 'softer' handover between sectors, each of two or more radio links operating simultaneously for the mobile device, is used to convey a fraction of the total data to be received by the mobile device, the remainder being conveyed by the other link(s); and the encoded data received via the simultaneously operating down links is recombined by the mobile device/transceiver equipment. This may typically be achieved by assigning two radio links in different sectors with higher spreading factors than a single radio link carrying all the data in one sector would have.

**EP 1 387 599 A1**

**Description**

The present invention relates to code division multiple access "CDMA" mobile communications systems and in particular to the management of the handover of mobile devices or user equipment between sectors.

Presently proposed CDMA mobile communications systems use a relatively small number of wide bandwidth carriers enabling data to be spread over a higher bandwidth carrier than is normal in TDMA systems (like GSM).

In both TDMA and CDMA systems the geographical area to be served by a network is divided into cells; each of which is served by a base station. In CDMA systems, adjacent cells re-use the same frequency, with cells being distinguished from each other by the use of predetermined scrambling codes. As a result, it is possible that when a mobile device is handed over from one cell to another the device may, for a transitional period, receive signals from several of the base stations sites. This is known as "soft" handover and has the advantage of better macro diversity and allows a smoother handover from one site to another than would be possible if the mobile device could only communicate with one base station at a time (as with GSM).

The region served by a base station may be divided into several sectors (or smaller cells), for example with the use of directional transceiver equipment at the base station site. This enables a greater number of mobile devices to communicate with one base station site at any time. It is then necessary for mobile devices to be handed from one sector to another as they move between sectors associated with a single base station site. Again it is advantageous for a mobile device to communicate over several radio links from different sectors of the same base station, for this transitional period. This is known as "softer" handover. If a CDMA system utilises sectors, adjacent sectors re-use the same frequencies with sectors being distinguished from each other by the use of predetermined scrambling codes.

Clearly it is possible that when a mobile device is in softer handover it may communicate over more than two radio links from different sectors. In practice the number of radio links involved in softer handover for a mobile device is unlikely to exceed three, but in theory this number could be as large as six with presently available technology.

Currently, the typical number of sectors serviced by any one base station is three. Hence, the whole of the area serviced by each base station is covered by at least one of the sectors while some of the area is covered by two (or more) overlapping sectors. In this case, the most likely scenario in which a mobile terminal will be involved in softer handover is when moving from one sector to another. Alternatively, a stationary mobile terminal situated in an area serviced by two (or more) sectors may be in on going communication with both (or all) the sectors, which is referred to as continuous handover. As will be discussed in more detail hereinafter, the capacity of CDMA systems is expected to be increased in the future by increasing the number of sectors on each base station. Hence, it is expected that the majority of the area serviced by a base station will be covered by more than one sector. In this case, it is more likely that a stationary mobile terminal will be in continuous handover.

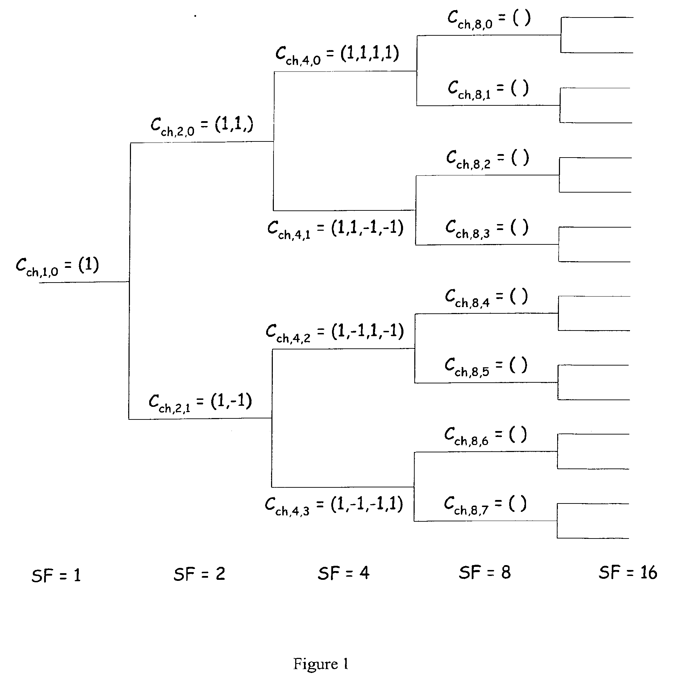

Encoded data {e.g. data that has been encoded for error correction} is mixed with two spreading codes before transmission, partly to avoid interference between signals to/from respective mobile devices, but also to identify the source of the transmission. For the purpose of this document, two types of spreading codes are considered. Thus, data transmitted on the downlink from the base station to the user equipment will have a scrambling code that identifies the cell/sector and a channelisation code that identifies the radio resource for a specific mobile device. The channelisation codes are allocated from a "tree" of orthogonal codes. Figure 1 illustrates a channelisation code tree. The individual codes in the tree are called Orthogonal Variable Spreading Factor (OVSF) codes, and are allocated to specific mobiles devices as they make and receive calls.

Figure 1 shows the available OVSF codes allocated to different radio links within a sector. In this case, these radio links all use the same scrambling code. Radio links requiring the highest data rate connections are allocated OVSF codes close to the base of the code tree. For lower data rates, codes higher up the OVSF code tree can be chosen. The data rate that can be supported by a radio link halves each time the code tree splits into two branches; this enables two radio links, each supporting half the capacity of the original radio link. The use of OVSF codes minimises the interference between different radio links transmitted within the same sector, since OVSF codes are orthogonal to each other. This imposes a limit to the number of orthogonal radio links, particularly at higher data rates.

For the purpose of this document it is necessary also to understand the term "spreading factor".

In the spreading process the encoded data to be transmitted (symbol data) is multiplied by the scrambling code and the channelisation code. These codes are at a much higher frequency (the chip rate) than the symbol data rate. The spreading factor is the ratio of the chip rate to the symbol rate.

$$SF = \frac{\text{chip rate}}{\text{symbol rate}}$$

This determines the carrier bandwidth, which the symbol data is spread across. For CDMA systems the chip rate and hence the corresponding carrier bandwidth are constant. In UMTS the chip rate is 3.84 Mchip/s. The spreading factor indicates both, the symbol rate that a radio link can support, and the channelisation code resource required. The larger the spreading factor, the smaller is the amount of resource used. A radio link with SF = 2 with have an OVSF codes from the first two branches of the code tree in Figure 1, radio links with SF = 4 will have OVSF codes from the next level up the code tree, and so on. As a result a cell/sector can support 16 radio links with SF = 16, or for example one radio link with SF = 4 and twelve radio links with SF = 16.

Clearly it is desirable for the spreading factor used in any transmission to be as large as possible. One channelisation code with SF = 4 is equivalent to four channelisation codes with SF = 16. Thus, using SF = 4 ties up four channelisation codes with SF = 16.

With conventional softer handover, all encoded data is transmitted to two or more sectors servicing the location of the mobile device, so that two or more links are transmitting identical encoded data. The difference between the down links is the allocated scrambling code.

Thus, in conventional CDMA mobile communications systems when the mobile is in soft or softer handover downlink channelisation code resources are reserved on all the radio links in the active set. This method of soft or softer handover does not use downlink channelisation codes efficiently when there are a large number of terminals in softer handover. In current systems there is little distinction made between mobiles in soft handover (between different base station sites) and mobiles in softer handover (between sectors originating from a single base station site).

As technical improvements are made to the radio link level performance, downlink system capacity will be less dominated by inter sector interference, and more by a shortage of downlink channelisation code resources. To increase the downlink capacity of code limited CDMA systems, base stations will be designed with increased numbers of downlink sectors (this both increases the amount of available channelisation code resource, and reduces the level of inter cell interference). However as the sector beam width is reduced, the number of terminals in softer handover will increase. This limits the efficient use of downlink channelisation code resources; since each terminal in softer handover, ties up more channel code resource than is really required.

According to the present invention it is proposed that when a mobile device is in softer handover, a fraction of the encoded data is transmitted from each sector so that each radio link can then use a higher spreading factor.

Thus, the present invention provides a method of operating a CDMA mobile communications system enabling communications with mobile devices in which:

    a) the geographical area to be covered by the system is divided into regions, each region serviced by a fixed transceiver;
    b) each region is divided into sub-regions;

    c) each mobile device in use communicates with a fixed transceiver via a link corresponding to the sub-region in which it is positioned and established between the mobile device and the fixed transceiver;
    d) the mobile device can be positioned such that it is serviced by two or more sub-regions;
    e) a mobile device in use in two or more sub-regions can communicate simultaneously with a fixed transceiver over two or more links corresponding to the two or more sub-regions;
    f) each of two or more links operating simultaneously for a mobile device, is used to convey a fraction of the total data to be received by the mobile device, the remainder being conveyed by the other link(s); and
    h) encoded data received via the simultaneously operating down links is recombined by the mobile device/transceiver equipment.

Examples of how the invention can be carried out will now be described by way of example only and with reference to the accompanying drawings in which:

    Figure 1 illustrates a code tree for generation of Orthogonal Variable Spreading Factor (OVSF) codes;

    Figure 2 is a schematic diagram explaining conventional softer handover;

    Figure 3 is a schematic diagram explaining softer handover carried out according to the invention;

    Figure 4 is a schematic diagram explaining soft handover carried out according to the invention; and

    Figure 5 illustrates the increased use of softer handover resulting from base stations having more sectors.

In general terms, in this invention, in 3G or other CDMA mobile communications systems, it is proposed that, for a user in 'softer' handover between sectors, each of two or more radio links operating simultaneously for the mobile device, is used to convey a fraction of the total data to be received by the mobile device, the remainder being conveyed by the other link(s), and the encoded data received via the simultaneously operating down links is recombined by the mobile device/transceiver equipment. This may typically be achieved by assigning two radio links in different sectors with higher spreading factors than a single radio link carrying all the data in one sector would have.

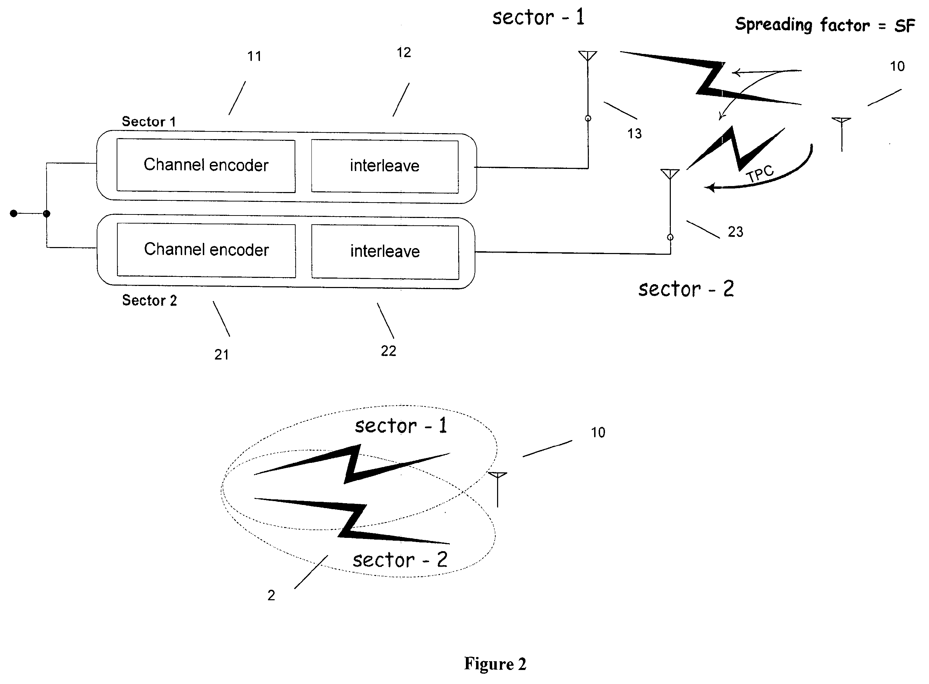

Referring now to Figure 2, a terminal or mobile device 10 is shown in softer handover. Thus, the terminal receives downlink data under the control of Radio Network Controller (RNC, not shown) via sector 1 channel encoder 11, sector 1 interleaver 12 and sector 1 transmitter 13, as well as via sector 2 channel encoder 21, sector 2 interleaver 22 and sector 2 transmitter 23. In this situation both radio links 11, 12, 13 and 21, 22, 23 will use the same spreading factor and only one radio link can be precisely power controlled. The lower part of Figure 2 shows the relationship between the sectors 1, 2. The terminal 10 in softer handover receives signals via both sector links.

For the purpose of this document a sector is to be regarded as a region on the downlink for which a unique scrambling code is used. For example, a SMART antenna array may form a beam to an individual terminal within a sector and the scrambling code used will depend on the sector in which the terminal is located. For terminals in close proximity to each other, (where the angular dispersion is limited and it is difficult for individual beams to separate out different terminals) the same downlink scrambling code should be used to minimise the amount of interference even though, strictly speaking, the terminals could be in different sectors.

As noted above, in the case illustrated in Figure 2, all the encoded data is transmitted within each sector, and is identical to that transmitted on the other radio links. The differences between the radio links are the scrambling codes used. In this case, the channelisation codes on the two radio links have a spreading factor of 'SF'.

In the idea proposed here, only a fraction of the encoded data is transmitted within each sector referred to herein as "fractional handover". Only by combining information sent from each sector can all the channel codec output data be reassembled, within the terminal receiver. Not all the encoded data, output from the channel codec, is transmitted within a single sector. As a result the radio link in that sector can use a higher spreading factor (e.g. K*SF where is K > 1). This releases channelisation code resources, which can be used for additional downlink capacity.

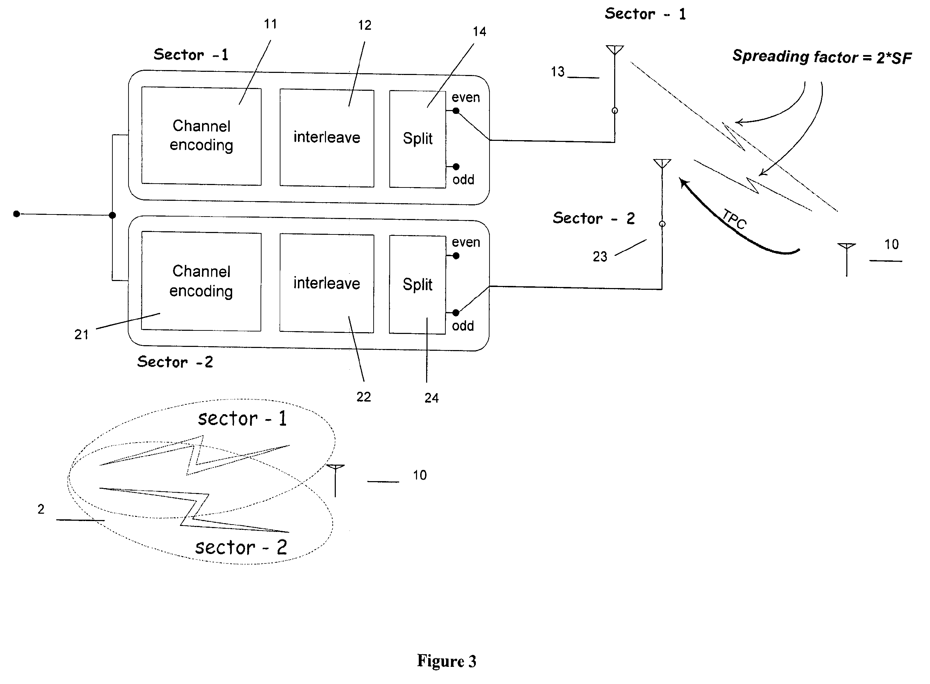

An example of fractional softer (between sectors) handover is illustrated in Figure 3, where like parts to Figure 2 are indicated with the same reference numerals. In contrast to Figure 2, each channel communicating with terminal 10 has a splitter, whereby in this particular example, alternate bits of the data to be transmitted are transmitted by each channel, the sector 1 channel conveying even bits and the sector 2 channel conveying odd bits. Since each radio link carries only half of the data it would normally transmit, it can use double the spreading factor. The received data from the radio links is combined at the terminal so none of the signal energy is lost.

In both this and conventional handovers, the energy per symbol received at the terminal is the same. Since the symbol rate has halved and the total transmit power is the same, the energy per symbol will double. Although received symbols cannot be coherently combined within the Rake receiver, macro diversity is not lost since the radio signals are multiplexed together after the receiver.

When the terminal is not in softer handover both the odd and even physical radio links are transmitted in the same sector. This is a conventional multi-code transmission. In the fractional softer handover scenario proposed here, a number of the multi-code links are handed over to another sector. This is effectively a partial, hard handover for a fraction of the multi-code transmission.

To ensure that all the downlink physical links from different sectors (at the same site) are transmitted at the same power, regardless of reception errors in decoding 'transmit power control' (TPC) commands, the base station should combine the received TPC commands from sectors in softer handover, received at the same base station site. Thus radio links in softer handover will be transmitted at the same power level.

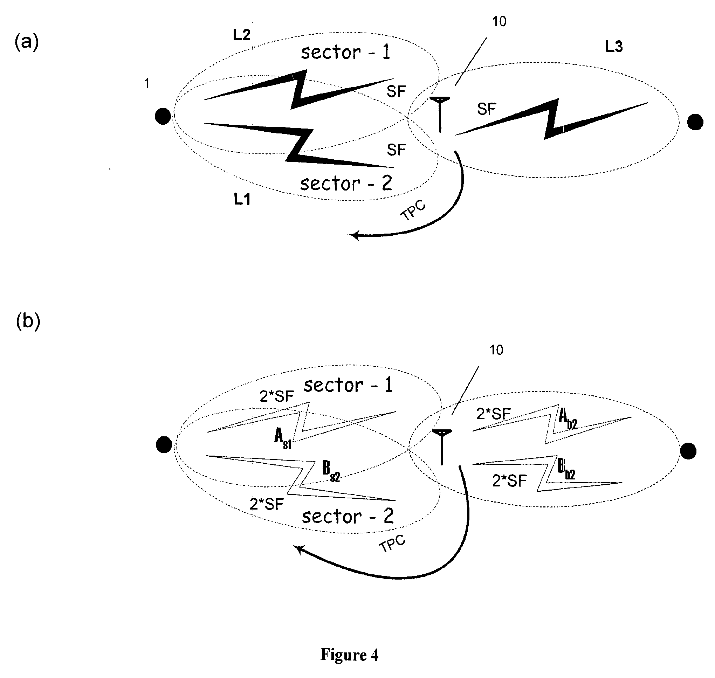

Figure 4 shows a terminal to which three links are established so that it is effectively in soft and softer handover. Thus, there are two links, L 1 and L2 from base station 1 to terminal 10, for two different sectors of base station 1, and a third link, L3, via one sector of a second base station 2.

Conventionally in this situation as indicated in Figure 4(a) all radio links would convey the same data and use the same spreading factor. Only one link would be power controlled via its associated base station.

Figure 4(b) shows a similar set-up this time using the present invention. Radio links $A_{s1}$ and $A_{b2}$ carry a fraction (e.g. all the even symbols) of the encoded data, whilst links $B_{s2}$ and $B_{b2}$ carry the remainder (e.g. all the odd symbols). At base station 1 there are two links via respective sectors using base station 1 channelisation codes, at spreading factor 2*SF. These radio links from different sectors of the same base station are transmitted at the same power level. The multi code transmission uses two channelisation codes from base station 2, each having a spreading factor of 2*SF.

Figure 4 illustrates that the advantages of "fractional" handover as proposed here for softer handover and that it is not possible to perform a "fractional" handover from one base station to another without some loss in received signal strength at the terminal. Fractional radio links can be handed from one sector to another, without any loss in received signal strength.

A difficulty with fractional soft handover is that the terminal needs to receive the same power level from each of the cells in the active set, and this is not easily achieved. The terminal only transmits one TCP command so it is not feasible to control the receive power for more than one link; also the fading on each link will be totally uncorrelated, - e.g. lognormal fading. This is not an issue for fractional handovers between sectors, since downlink TCP commands can be combined at the base station, and radio links in softer handover will exhibit some correlation between each other, being transmitted from the same site.

In a conventional CDMA systems 30-40% of voice calls can be in soft handover. The fractional handover scheme proposed here will reduce the channelisation code overhead imposed by softer handover, but cannot reduce that from normal soft handover.

When in softer handover, the number of sectors involved is unlikely to exceed three but in theory this number could be as large as six with the presently available technology. As made clear above, when in softer handover between two sectors, each sector contains one radio link and the data is split equally between the two radio links. Each radio link is therefore able to utilise double the spreading factor and hence use half the channelisation code resources. Similarly, if softer handover occurs between four sectors, each sector contains one radio link and the data is split equally between four radio links. Each radio link is therefore able to utilise quadruple the spreading factor and hence use a quarter of the channelisation code resources.

The situation is not so simple if softer handover occurs involving three sectors (or with any number of odd sectors). As can be seen from the channelisation code tree in Figure 1, as you move up each level of the tree, the channelisation codes increase in number by a factor of two. Therefore it is not possible to triple the spreading the spreading factor. In such a situation where softer handover is occuring between three sectors, an arrangement is proposed in which two of the three sectors each contain one radio link and the third sector contains two radio links. The data is split equally between each of the four radio links and each of these four radio links and utilises quadruple the spreading factor and hence uses a quarter of the channelisation code resources. The skilled person would appreciate how the above described technique could be applied to sector handover involving a greater odd number of sectors.

At present mobile phone systems are dominated by circuit switched voice traffic, these channels require soft and softer handover. In the future it has been widely predicted that packet switched data traffic will come to dominate the total network throughput, with the growth of mobile Internet services. These packet switched data channels aren't required to operate in soft or softer handover - relying on hard handovers and retransmissions. The downlink shared channel (DSCH) and highspeed downlink packet access (HSDPA) are two such examples of a packet switch channel, which doesn't require the terminal to go into soft or softer handover. Both these channel types will tie up large amounts of channelisation (OVFS) code resources to operate effectively. The use of multiple sectors, forming narrow downlink beams is one way the channelisation code capacity can be increased without the use of secondary scrambling codes and the subsequent loss of downlink orthogonality. Given these constraints the concept of fractional softer handover enables an efficient method of operating circuit switch connections in a cellular network; which has been optimised for packet switched data.

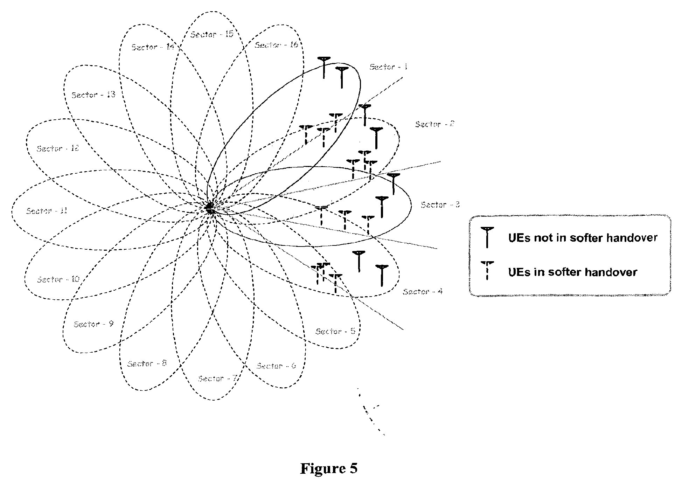

Figure 5 illustrates how increasing the number of sectors at one base station increases the number of terminals (user equipment or UE) in softer handover.

It will be appreciated that, although this application defines sectors, the present invention could be applied by a skilled person to systems which involve denominations other than sectors.

## Claims

1. A method of operating a CDMA mobile communications system enabling communications with mobile devices in which:

   a) the geographical area to be covered by the system is divided into regions, each region serviced by a fixed transceiver;
   b) each region is divided into sub-regions;
   c) each mobile device in use communicates with a fixed transceiver via a link corresponding to the sub-region in which it is positioned and established between the mobile device and the fixed transceiver;
   d) the mobile device can be positioned such that it is serviced by two or more sub-regions;
   e) a mobile device in use in two or more sub-regions can communicate simultaneously with a fixed transceiver over two or more links corresponding to the two or more sub-regions;
   f) each of two or more links operating simultaneously for a mobile device, is used to convey a fraction of the total data to be received by the mobile device, the remainder being conveyed by the other link(s); and
   h) encoded data received via the simultaneously operating down links is recombined by the mobile device/transceiver equipment.

2. A method as claimed in claim 1 wherein the two or more links each having a higher spreading factor than the single link.

3. A method as claimed in claim 2 wherein when said two or more links from the same fixed transceiver are established, downlink channelisation resources are relinquished from the fixed transceiver for each of the sectors in which said links are established.

4. A method as claimed in any preceding claim in which the data to be transmitted is shared equally between the links.

5. A method as claimed in claim 4 wherein for two simultaneously operating links, alternate bits are transmitted over each link.

6. Any of the methods substantially as hereinbefore

**EP 1 387 599 A1**

described with reference to the accompanying drawings.

$C_{ch,8,0} = (\ )$

$C_{ch,4,0} = (1,1,1,1)$

$C_{ch,8,1} = (\ )$

$C_{ch,2,0} = (1,1,)$

$C_{ch,8,2} = (\ )$

$C_{ch,4,1} = (1,1,-1,-1)$

$C_{ch,8,3} = (\ )$

$C_{ch,1,0} = (1)$

$C_{ch,8,4} = (\ )$

$C_{ch,4,2} = (1,-1,1,-1)$

$C_{ch,8,5} = (\ )$

$C_{ch,2,1} = (1,-1)$

$C_{ch,8,6} = (\ )$

$C_{ch,4,3} = (1,-1,-1,1)$

$C_{ch,8,7} = (\ )$

SF = 1          SF = 2          SF = 4          SF = 8          SF = 16

Figure 1

Figure 2

EP 1 387 599 A1

Figure 3

EP 1 387 599 A1

Figure 4

**Figure 5**

**European Patent Office**

**EUROPEAN SEARCH REPORT**

Application Number

EP 03 25 4743

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | WO 01 78293 A (QUALCOMM INC) 18 October 2001 (2001-10-18) * abstract; claims 1,5,7,9; figures 2-6 * * page 9, line 23 - page 10, line 7 * * page 19, line 22 - line 29 * --- | 1-6 | H04Q7/38 H04B1/707 |
| X | EP 1 223 702 A (LUCENT TECHNOLOGIES INC) 17 July 2002 (2002-07-17) * abstract; claim 1; figures 1,2 * * page 2, line 30 - page 3, line 6 * * page 3, line 58 - page 4, line 5 * --- | 1 | |
| A | WO 00 02404 A (ORBITAL SCIENCES CORP) 13 January 2000 (2000-01-13) * abstract; claim 1; figures 5-7 * * page 9, line 1 - line 7 * * page 10, line 24 - page 11, line 4 * * page 11, line 33 - page 12, line 9 * ----- | 1-6 | |

TECHNICAL FIELDS SEARCHED (Int.Cl.7)

H04Q
H04B

The present search report has been drawn up for all claims

| Place of search | Date of completion of the search | Examiner |
|---|---|---|
| BERLIN | 30 October 2003 | Danielidis, S |

EPO FORM 1503 03.82 (P04C01)

**ANNEX TO THE EUROPEAN SEARCH REPORT
ON EUROPEAN PATENT APPLICATION NO.**

EP 03 25 4743

This annex lists the patent family members relating to the patent documents cited in the above-mentioned European search report.
The members are as contained in the European Patent Office EDP file on
The European Patent Office is in no way liable for these particulars which are merely given for the purpose of information.

30-10-2003

| Patent document cited in search report | | Publication date | Patent family member(s) | | Publication date |
|---|---|---|---|---|---|
| WO 0178293 | A | 18-10-2001 | US | 6560292 B1 | 06-05-2003 |
| | | | AU | 5323601 A | 23-10-2001 |
| | | | CN | 1435025 T | 06-08-2003 |
| | | | EP | 1269673 A1 | 02-01-2003 |
| | | | WO | 0178293 A1 | 18-10-2001 |
| | | | US | 2003174758 A1 | 18-09-2003 |
| EP 1223702 | A | 17-07-2002 | US | 2002118770 A1 | 29-08-2002 |
| | | | EP | 1223702 A1 | 17-07-2002 |
| WO 0002404 | A | 13-01-2000 | US | 5978365 A | 02-11-1999 |
| | | | AU | 749517 B2 | 27-06-2002 |
| | | | AU | 5090799 A | 24-01-2000 |
| | | | BR | 9912256 A | 17-04-2001 |
| | | | CN | 1308821 T | 15-08-2001 |
| | | | EP | 1095529 A1 | 02-05-2001 |
| | | | JP | 2003503863 T | 28-01-2003 |
| | | | KR | 2001083095 A | 31-08-2001 |
| | | | WO | 0002404 A1 | 13-01-2000 |
| | | | US | 6094427 A | 25-07-2000 |

EPO FORM P0459

For more details about this annex : see Official Journal of the European Patent Office, No. 12/82